# EUROPÄISCHE PATENTSCHRIFT

(11) **EP 0 604 500 B1**
(45) Veröffentlichungstag und Bekanntmachung des Hinweises auf die Patenterteilung: **26.06.1996**
(21) Anmeldenummer: 92919420.7
(22) Anmeldetag: 16.09.1992
(51) Int. Cl.: A01D 75/28

(54) **FAHRZEUG, INSBESONDERE LANDMASCHINE, MIT SCHWENKVORRICHTUNG**
VEHICLE, ESPECIALLY AGRICULTURAL APPLIANCE, WITH A SWIVELLING DEVICE
VEHICULE, EN PARTICULIER MACHINE AGRICOLE, AU MOYEN D'UN DISPOSITIF DE PIVOTEMENT

(30) Priorität: 21.09.1991 DE 4131433; 23.03.1992 DE 4209340; 06.04.1992 DE 9204713 U
(43) Veröffentlichungstag der Anmeldung: 06.07.1994
(60) Teilanmeldung: 95114704.0
(73) Patentinhaber: DEERE & COMPANY, Moline, Illinois 61265 (US)
(72) Erfinder: KEMPF, Bernd, W-6661 Althornbach (DE); SCHEID, Heinrich, W-6653 Blieskastel (DE); ROTH, Wolfgang, W-6660 Zweibrücken (DE); PAULI, Klaus, W-6650 Homburg (DE); VON MELTZING, Wolfgang, W-6653 Bierbach (DE)
(74) Vertreter: Feldmann, Bernhard
(86) Internationale Anmeldenummer: EP9202121
(87) Internationale Veröffentlichungsnummer: WO9305640

(56) Entgegenhaltungen:
- DE-B- 1 066 878
- FR-A- 1 136 449
- GB-A- 336 029
- US-A- 2 753 675
- US-A- 3 731 470
- LANDTECHNIK Bd. 34, Nr. 6, Juni 1979, LEHRTE, HANNOVER DE Seiten 282 - 286 TEBRüGGE 'Hangmähdrescher aus technischer und ökonomischer Sicht'

## Beschreibung

Die Erfindung betrifft ein Fahrzeug, insbesondere Landmaschine, mit einem oder mehreren zusammengesetzten Tragteilen und einem an diesen angeschlossenen Radträger für ein insbesondere angetriebenes Rad, die an jeweiligen Trennstellen miteinander und mit einem Fahrgestell lösbar verbindbar sind.

Maschinen, insbesondere Fahrzeuge, werden grundsätzlich für den Betrieb auf ebenem Boden ausgebildet; demzufolge kann der Einsatz im Gelände, in dem die Aufstandsfläche mehr oder weniger geneigt verläuft, zu nicht unwesentlichen Beeinträchtigungen der Funktion der Maschine führen. Im Falle eines für den Einsatz in der Ebene bestimmten Mähdreschers ist herkömmlich eine Tragvorrichtung vorgesehen, die einen als Achsrohr ausgebildeten Rahmen enthält, an dessen Enden ein Flansch angebracht ist, der der Verbindung mit einem Gegenflansch an einem Endantriebsgehäuse dient. Wird dieser Aufbau belassen, muß bei der Arbeit am Hang entweder mit Kornverlusten gerechnet werden, oder in dem Mähdrescher vorhandene Funktionsgruppen müssen so ausgebildet werden, daß sie eine Hangneigung ausgleichen können.

Andererseits sind bereits Tragvorrichtungen vorgeschlagen worden, mit denen eine am Hang bzw. auf sonstigen geneigten Flächen arbeitende Maschine in eine horizontale Stellung gebracht werden kann.

So zeigt die US-A-37 31 470 einen Mähdrescher mit Endantrieben, die jeweils an einen Schwenkarm angeschlossen und vertikal schwenkbar in einer an einem Rahmen befestigten Konsole gelagert sind. Die Schwenkarme werden mittels eines Hydraulikzylinders um eine horizontale Achse geschwenkt, zu der ein hülsenförmig ausgebildeter Schenkel des Schwenkarms konzentrisch verläuft. Der Endantrieb wird mit dem Schwenkarm vertikal verschwenkt und verstellt somit die Höhe bzw. Neigung des Mähdreschers aufgrund von Signalen, die von einem Neigungssensor ermittelt wurden. In dem Schwenkarm ist zudem ein Kettengetriebe vorgesehen, das den Antrieb von einem Getriebe zu dem Endantrieb überbrückt.

Diese Schwenkvorrichtung ist nachteilig, weil der Schwenkarm ein Getriebe enthalten muß, das den Antrieb zwischen der Antriebsquelle und dem Endantrieb überträgt und die Baubreite des Mähdreschers erheblich vergrößert. Zudem handelt es sich dabei um eine ganz spezielle Bauart, die nur für Hangarbeit brauchbar ist.

Es ist weiterhin bekannt (US-A-3,703,298 und Prospekt: Laverda mietitrebbia autolivellante M 100 AL, Ditta Pietro Laverda, 1^{a} edizione 1971 - FOZ), den gesamten Achskörper eines Mähdreschers in einer quer zur Fahrtrichtung verlaufenden Ebene zu verschwenken und den Antrieb mittels Kardanwellen zu übertragen.

Der Aufwand zum Ausrüsten eines Fahrzeugs mit einer derartigen Schwenkvorrichtung ist sehr hoch.

Die DE-A-1 066 878 und die DE-A-808 183 zeigen jeweils eine Aufhängung eines Rades einer Antriebsachse eines Ackerschleppers, wobei das Rad in einer vertikalen Ebene schwenkbar und darüber hinaus in einer bestimmten Stellung festlegbar ist. Auf diese Weise kann der Ackerschlepper auf der Straße mit einer tiefen Lage des Schwerpunkts und auf dem Feld mit einer hohen Schwerpunktlage gefahren werden, was Beschädigungen von Feldfrüchten durch den Ackerschlepper vermeiden hilft.

Es ist weiterhin bekannt, bei Ackerschleppern sowie anderen Fahrzeugen, insbesondere Nutzfahrzeugen, Räder nicht höhenbeweglich, sondern direkt oder über einen Halter, der meist als Endantrieb ausgebildet ist, anzuschließen.

Bei derartigen Maschinen kann es sich um jegliche Art von Fahrzeugen, also Landmaschinen, Baufahrzeuge, Forstfahrzeuge, Geländefahrzeuge und dergleichen handeln.

Die der Erfindung zugrunde liegende Aufgabe wird darin gesehen, eine Lösung vorzuschlagen, die es ermöglicht, mit relativ wenigen und einfachen Mitteln ein Fahrzeug sowohl für den Einsatz am Hang oder auf einer geneigten Fläche als auch in der Ebene tauglich zu machen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann zwischen das Rad und das Fahrgestell eine Schwenkvorrichtung eingefügt werden, ohne daß es einer Änderung dieser Komponenten bedarf.

Das Fahrgestell, also ein Chassis, ein Unterbau, ein Rahmen, ein Maschinengehäuse oder dergleichen, sowie das Rad und dessen Radträger bleiben bei beiden Bauarten gleich; die beiden Bauarten unterscheiden sich lediglich dadurch, daß einmal eine das Rad in der Höhe verstellende Schwenkvorrichtung vorhanden ist und ein andermal nicht. Hierzu wird die Schwenkvorrichtung lediglich an der Stelle des Radträgers angeschlossen. Die Möglichkeit, das Fahrzeug mit seinem Fahrgestell ein- oder beidseitig anzuheben, ist nicht nur für den Einsatz des Fahrzeugs am Hang geschaffen; vielmehr kann dies auch beim Verladen, zu Wartungszwecken, beim Befahren von unebenem Gelände und dergleichen von Vorteil sein.

Soll das Rad einen größeren Abstand zu dem Fahrgestell einnehmen, ist der Bereich des Fahrgestells, in dem das Rad vorgesehen ist, schwer zugänglich oder nicht für eine unmittelbare Befestigung des Radträgers geeignet, ist es sinnvoll, einen Tragteil einzusetzen, der die Verbindung zwischen dem Radträger und dem Fahrgestell herstellt.

Eine Landmaschine kann auch lediglich durch den Austausch ihrer Tragteile, also insbesondere ihrer Achse, im übrigen aber mit dem gleichen Aufbau und insbesondere mit dem gleichen Fahrgestell sowohl als eine Maschine zum Einsatz auf ebenem Gelände, als auch als Hangmaschine verwendet werden. Die Umrüstung ist einfach und schnell durchführbar und kann sowohl während der Fertigung als auch zu einem späteren Zeitpunkt nachträglich vollzogen werden. Der Tragteil kann als vorgefertigte Baueinheit in den verschiedenen Ausführungen, jedoch mit gleichen Anschlußmaßen für das Fahrgestell einerseits und den Radträger andererseits vorgefertigt werden.

Aber auch der Tragteil selbst unterliegt keiner allzu großen Änderung gegenüber einem Standard-Tragteil, also einem solchen, an den der Radträger starr angeschlossen ist, wenn in der Schwenkvorrichtung alle oder die wesentlichen für die vertikale Schwenkbewegung des Radträgers erforderlichen Komponenten enthalten sind und somit diese ebenfalls als eine Einheit anschraub- oder anschweißbar ist.

Es ist auch anders als im Stand der Technik keine Pendelachse oder dergleichen erforderlich, sondern der bisherige Tragteil und/oder das bisherige Fahrgestell bleiben erhalten, und anstatt seiner direkten Verbindung mit dem Radträger wird nun eine Konsole mit einem Schwenkarm dazwischen geschaltet, die den Schwenkvorgang ermöglicht. Sowohl der Radträger als auch das Fahrgestell als auch die Antriebsquelle sind bei den Maschinen für beide Einsatzzwecke gleich.

Wird ein als Getriebegehäuse ausgebildeter Radträger zwischen das Rad und das Fahrgestell sowohl bei dem hangtauglichen als auch bei dem hanguntauglichen Fahrzeug verwendet, kann das Rad weiter von dem Fahrgestell entfernt angebracht sein, was dessen Bewegungsfreiraum vergrößern kann, und die Antriebsenergie kann optimal übertragen werden.

Das Vorsehen zweier einen Abstand zueinander aufweisender Wellen als Eingangswelle und als Ausgangswelle an dem Radträger, die zueinander parallel verlaufen, ermöglicht die Nutzung des durch den Hebelarm entstandenen Raums für eine Untersetzungsstufe.

Wenn die Achse der Ausgangswelle einer Antriebsquelle, die einer Eingangswelle des Radträgers und die eines Lagers zur Aufnahme des Schwenkarms koaxial zueinander verlaufen, kann die Schwenkbewegung um die beiden Wellen erfolgen, ohne daß es zu einer Änderung der relativen Lage zwischen diesen kommt; die Ausrichtung der Eingangswelle zu der Abtriebswelle bleibt erhalten; diese verlaufen konzentrisch zu der Schwenkachse des Radträgers.

Allerdings sind auch andere Antriebsmöglichkeiten gegeben.

Der Antrieb der Räder kann auf beliebige Weise ausgeführt werden, d. h., es kann ein mechanisches oder hydrostatisches Getriebe über eine koaxial oder schräg verlaufende Welle, erforderlichenfalls über eine Gelenkwelle, mit dem Rad in Verbindung stehen.

Allerdings kann auch der Antrieb direkt auf eine Eingangswelle des Radträgers aufgesetzt sein.

Der Antrieb des Radträgers kann anstatt über eine Welle von einem mechanischen Getriebe aus auch direkt mittels eines Druckmittelmotors erfolgen, der umso geschützter ist, wenn er innerhalb des ersten Schenkels untergebracht wird.

Die Ausbildung als zwei- oder mehrstufiger Druckmittelmotor führt zu einem großen Geschwindigkeitsbereich.

Die getrennte Ausbildung und anschließende formschlüssige und vorzugsweise lösbare Verbindung beider Schenkel des Schwenkarms ist fertigungstechnisch günstig, weil der eine Schenkel eine hohe Festigkeit und der andere Schenkel eine gute Gleiteigenschaft in dem Lager aufweisen muß, was mit einem aus gleichem Material hergestellten einteiligen Schwenkarm mitunter schwer zu erreichen ist. Der Schwenkarm kann festigkeitsmäßig optimal ausgebildet werden, wenn seine Schenkel für die jeweilige Beanspruchung aus geeignetem Material gebildet und anschließend vorzugsweise mittels Schweißen oder anderer, lösbarer Verbindungsarten zusammengefügt werden. Auf diese Weise ist es z. B. möglich, den mit dem Radträger verschraubten einen Schenkel aus einem hochfesten Schmiedeteil zu bilden, während ein senkrecht dazu verlaufender und in ein drehbares Lager eingesetzter Schenkel mit einer hohen Oberflächengüte versehen wird.

Das Vorhandensein eines Anschlags an dem Schwenkarm, insbesondere an dessen zweiten Schenkel, stellt ein Sicherheitsmerkmal dar, weil dadurch beim Ausfall der Stellvorrichtung vermieden werden kann, daß der Radträger in eine Stellung gelangt, in der das Fahrzeug Schaden nimmt. Dieser Anschlag kann an der Konsole oder an dem Tragteil zur Anlage kommen.

Eine Teileoptimierung tritt ein, wenn der Anschlag, der als Zapfen ausgebildet sein kann, zugleich einen Angriffspunkt für die Stellvorrichtung bildet.

Wird an den Schwenkarm ein Geberglied angeschlossen, das dessen Stellung ermittelt und daraus ein Ausgangssignal bildet, kann mit diesem ein Nehmerglied gesteuert werden, das bei einem Mähdrescher z. B. dessen Erntebergungsvorrichtung in einer Lage parallel zu dem Boden führt. Das Geberglied kann sowohl hydraulisch, wie auch mechanisch oder elektrisch wirkend ausgebildet sein. Die hydraulische Ausbildung ist dort von sehr großem Nutzen, wo hohe Stellkräfte übertragen werden müssen.

Vorzugsweise kann die Schwenkvorrichtung zu einem Bausatz zusammengefaßt werden, der es ermöglicht, ein bereits für den Einsatz in der Ebene gebautes Fahrzeug nachträglich hangtauglich zu machen.

Eine schnelle und problemlose Nachrüstung ist dann möglich, wenn der Schwenkarm und die Konsole derart ausgebildet sind, daß sie einerseits an den Flansch an dem Tragteil, andererseits an den Gegenflansch an dem Radträger angebaut werden können.

Ein in die Konsole eingefügtes, insbesondere eingeschweißtes Leitungsführungsrohr nimmt schützend Hydraulikschläuche für die Stellvorrichtung auf.

Die Verwendung wenigstens eines Distanzrings zwischen dem ersten Schenkel und dem Lager, der wahlweise zwischen der einen oder der anderen Stirnseite des als Hülse ausgebildeten Lagers und dem ersten Schenkel eingefügt werden kann, ermöglicht es, den ersten Schenkel dauerhaft in dem Lager in unterschiedlichen axialen Stellungen zu halten und somit die Spurbreite des Fahrzeug bzw. der Landmaschine zu variieren.

Sind in dem getriebeseitigen Anschlußmittel, insbesondere in dem Schwenkarm, also in dessen zweiten Schenkel, mehrere, insbesondere unterschiedliche Lochbilder eingearbeitet, ist der Anschluß verschiedener Radträger oder der Anschluß des gleichen Radträgers in verschiedenen Stellungen möglich.

Eine schnelle Umrüstung auf Hangtauglichkeit ist gewährleistet, wenn an allen möglichen und zusammengehörenden Verbindungsstellen Schraubflansche mit dem gleichen, jedenfalls aber mit einem zusammenpassenden Lochbild verwendet werden.

In vorteilhafter Weise ist ein Tragteil vorgesehen, der aus zwei Teilen besteht, wobei der eine, erste Teil stets an dem Fahrgestell verbleibt, oder stets für die Verbindung mit diesem vorgesehen ist, und der zweite Teil gegen die Schwenkvorrichtung austauschbar ist. Diese letztgenannte Möglichkeit führt dazu, daß die Baubreite, die für den Transport des Fahrzeugs sehr wesentlich sein kann, stets gleich bleibt und innerhalb der gesetzlichen Vorschriften gehalten werden kann.

Je nachdem, ob es auf die Einhaltung einer bestimmten Fahrzeugbreite im Bereich der Räder ankommt oder nicht, kann das Fahrgestell bzw. der Tragteil an der inneren oder der äußeren Wand einer doppelwandigen Konsole der Schwenkvorrichtung angeschlossen werden.

Ist ein Anschluß an der äußeren Wand vorgesehen, kann durch Ausschnitte in den oberen Bereichen der Wände der Tragteil in die Schwenkvorrichtung mit einbezogen werden, so daß sich auch die Bauhöhe nicht verändert.

Die Konsole kann noch breiter ausgebildet werden, ohne daß sich dadurch die Baubreite der Landmaschine bzw. des Fahrzeugs überhaupt oder merklich erhöht, wenn sie wenigstens teilweise in vertikaler Deckung zu einer Seitenwand des Fahrgestells angebracht wird.

Wird ein die Stellvorrichtung abstützender Bolzen als Sensorglied, z. B. als Last- oder Druckbolzen ausgebildet, kann über die empfangenen Signale, z. B. ein Überlastzustand oder die Gewichtszunahme z. B. aufgrund der Korntankbefüllung ermittelt werden.

Eine minimierte Beanspruchung der Stellvorrichtung in einem Außerbetriebszustand wird erreicht, wenn die Kolben ganz in die Zylinder eingefahren und somit drucklos sind und zwischen einem Ruhe- und einem Voll-Betriebszustand unterschieden wird, wobei nur in dem Vollbetriebszustand eine Regelung des Schwenkmaßes des Radträgers erfolgt.

Die beiden aus Kolben und Zylinder bestehenden Stellvorrichtungen können auf vorteilhafte Weise auch so auf manuelle Weise gesteuert werden, daß sie ganz ausfahren und somit die Landmaschine über ein für den Betrieb normalerweise geeignetes Maß anheben. Das Anheben kann Vorteile bei der Verladung, bei der Wartung, beim An- und Abkuppeln eines Vorsatzes und ähnlicher Vorgänge entwickeln.

Der Radträger wird besonders starr mit dem zweiten Schenkel verbunden, wenn die Verwendung von Dehnschrauben ermöglicht wird, was durch die Anbringung, insbesondere das Angießen oder das Anschmieden von Zapfen erreicht wird, in die eine Stufenbohrung eingebracht wird.

Eine optimale und alle Betriebszustände erfassende Regelung des Fahrzeugs ist möglich, wenn auf die Regeleinrichtung der Stellvorrichtungen selbst oder auf eine an diese angeschlossene Steuerung der Querneigung eines an das vordere Ende des Fahrzeugs, z. B. eines Mähdreschers angebauten Vorsatzes zusätzlich ein Vorsatz-Querausgleichssystem wirkt, das zum Ziel hat, den Vorsatz zusätzlich und unabhängig von einer Hangneigung stets parallel zu dem Boden zu führen.

Der Vorteil der beanspruchten Sicherheitsschaltung besteht darin, daß die Last der Landmaschine nicht auf einer Stellvorrichtung alleine ruht, wenn z. B. ein Hydraulikschlauch zu der anderen Stellvorrichtung beschädigt wurde und letztere nicht mehr unter Druck gesetzt bzw. unter Druck gehalten werden kann.

Eine Anzeige der Querneigung des Fahrzeugs, die mittels eines Stellungssensors an dem Radträger, der Stellvorrichtung, dem Schwenkarm oder dergleichen direkt von dem Schwenkvorgang betroffenen Teile oder mittels einer Pendelbox aufgebaut werden kann, gibt einer Bedienungsperson eine Mitteilung darüber, wie geneigt die Landmaschine steht, um z. B. Sicherheitsvorkehrungen beim Wenden am Hang treffen zu können.

Der Tragteil kann als ein eigenständiger Teil in den verschiedenen Versionen gefertigt und an bereits im Einsatz befindliche Fahrzeuge angebaut werden, so daß eine Nachrüstung auf den neuesten Stand der Technik möglich ist.

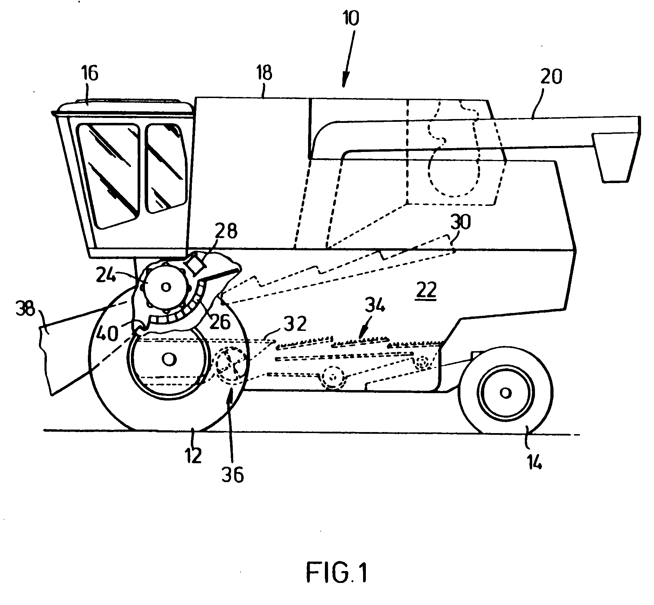

In der Zeichnung sind mehrere nachfolgend näher beschriebene Ausführungsbeispiele der Erfindung dargestellt. Es zeigt:
- Fig. 1: ein Fahrzeug in Seitenansicht,
- Fig. 2: einen Tragteil mit einer Schwenkvorrichtung in Draufsicht,
- Fig. 3: einen Tragteil anderer Bauart mit einer Schwenkvorrichtung in Draufsicht,
- Fig. 4: einen Tragteil mit einer geänderten Schwenkvorrichtung in Draufsicht,
- Fig. 5: einen Tragteil mit einer in anderer Weise angebrachten Schwenkvorrichtung in Draufsicht,
- Fig. 6: die Schwenkvorrichtung nach den Figuren 2 bis 5 in Seitenansicht,
- Fig. 7: einen Tragteil ohne Schwenkvorrichtung in Draufsicht,
- Fig. 8: einen Tragteil ohne Schwenkvorrichtung, aber mit einem Zwischenstück in Draufsicht,
- Fig. 9: einen Tragteil ohne Schwenkvorrichtung in Draufsicht und
- Fig. 10: einen Tragteil ohne Schwenkvorrichtung, aber mit einem Zwischenstück in Draufsicht,
Ein in Figur 1 gezeigtes Fahrzeug 10 der Gattung Landmaschine in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso jede andere Art von Land- Bau- und Forstmaschine oder sonstigem Fahrzeug, insbesondere ein Traubenvollernter, ein Hochrad-Ackerschlepper, eine Mähmaschine, ein Geländefahrzeug, ein Freizeitfahrzeug, ein Feldhäcksler, ein Baumwollpflücker, ein Ackerschlepper, ein Bagger, ein Baumfäller und ein Lastwagen oder dergleichen für die Anwendung der Erfindung dienen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Fahrgestell 22, das ein Chassis, ein Fahrzeugtragrahmen, ein Unterbau oder dergleichen sein kann und an das die vorderen Räder 12 in diesem Ausführungsbeispiel über einen in vielfältiger Weise ausbildbaren Tragteil 46 und jeweils ein Getriebegehäuse 50 dreh- und antreibbar angeschlossen sind; die Räder 12 können aber auch direkt an das Fahrgestell 22 angeschlossen sein. In dem Fahrgestell 22 wird zugeführtes Gut auf dem Weg über eine Dreschtrommel 24, einen Dreschkorb 26 und eine Wendetrommel 28 in seine großen und kleinen Bestandteile zerlegt. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einem nicht gezeigten und als Erntegutbergungsvorrichtung ausgebildeten Vorsatz vom Boden aufgenommen worden ist.

Die Qualität und die Quantität der Trennung des Ernteguts auf den Schüttlern 30, dem Vorbereitungsboden 32 und den Sieben 34 sind am besten, wenn sich das Fahrzeug 10 auf einer waagrechten Aufstandsfläche befindet.

Für den Einsatz in Hanglagen ist daher eine erfindungsgemäße Schwenkvorrichtung 44 vorgesehen, die das Fahrzeug 10 innerhalb bestimmter Grenzen in einer waagrechten Lage hält.

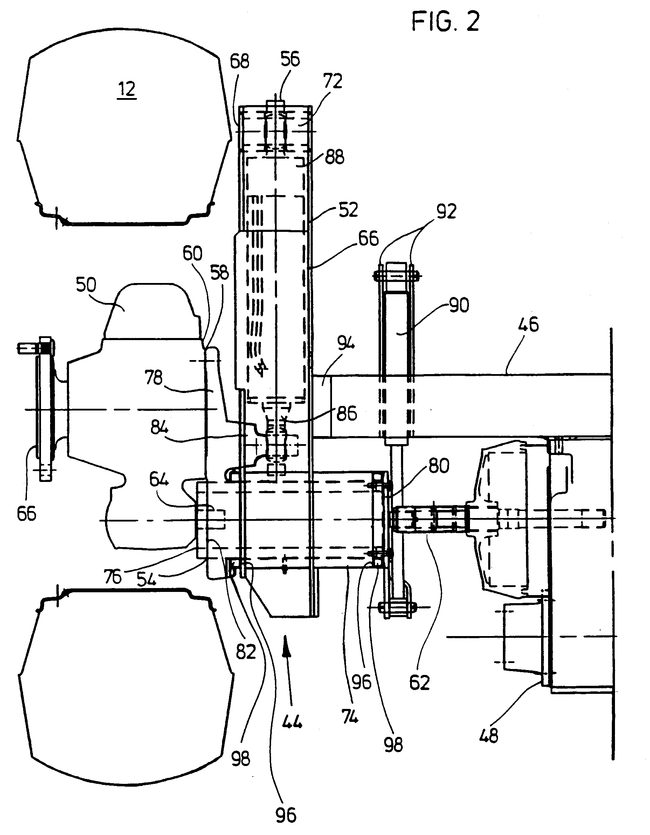

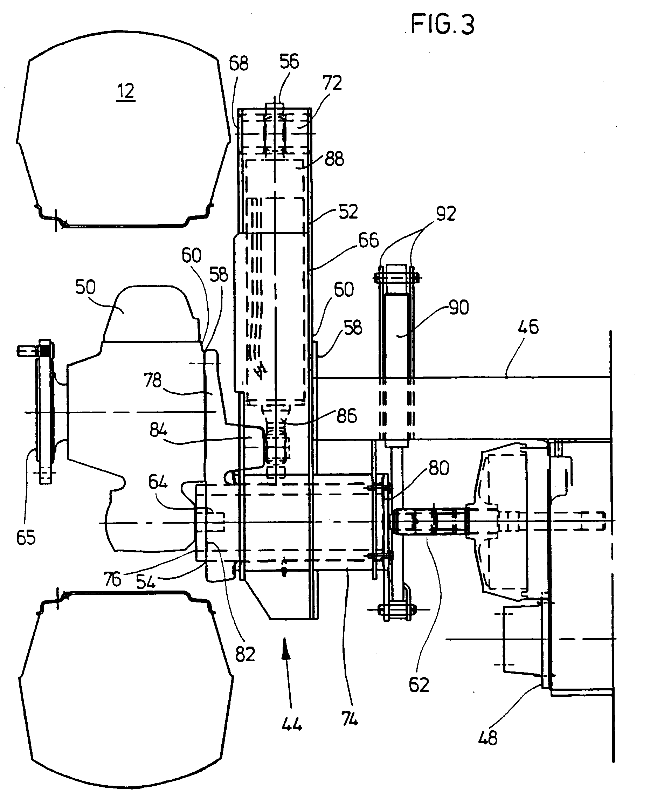

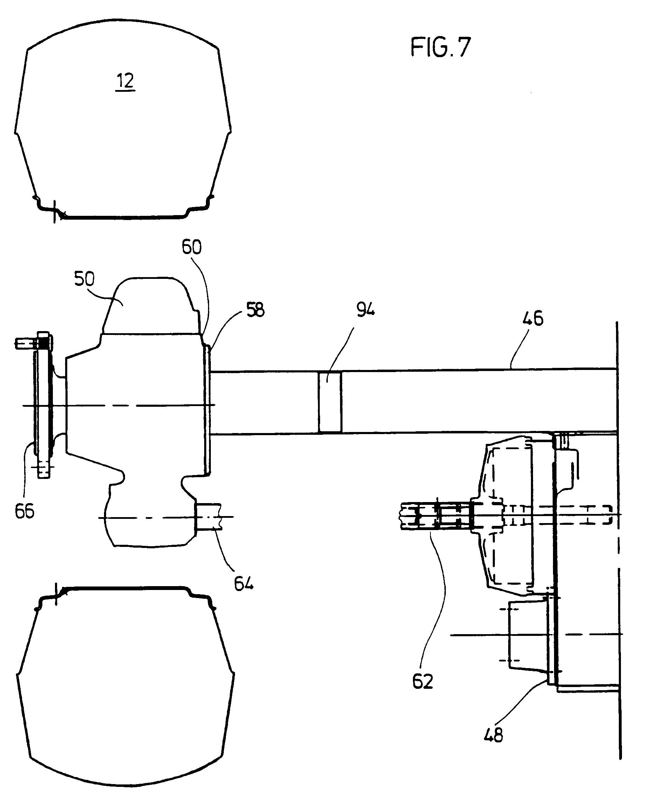

Für den Einsatz in ebenem Gelände ist der Tragteil 46 gemäß den Figuren 7 bis 10 starr mit dem Radträger 50 verbunden. Für den dauerhaften oder teilweisen Einsatz des Fahrzeugs 10 in Hanglagen sind die Radträger 50 gemäß den Figuren 2 bis 6 über die Schwenkvorrichtung 44 vertikal schwenkbar an den Tragteil 46 angeschlossen, so daß das Fahrzeug 10 innerhalb bestimmter Grenzen in einer waagrechten Lage gehalten werden kann.

In den Figuren 2 bis 10 sind verschiedene Lösungen eines Tragteils 46 gezeigt, wie sie geeignet sind, aus Fahrzeugen 10 mit gleichem Fahrgestell 22 solche für den Einsatz auf ebenem Gelände und solche für den Einsatz in Hanglagen zu machen. Zu ihrer Verbindung mit dem Fahrgestell 22 ist der Tragteil 46 mit nicht detailliert gezeigten Anschlußmitteln versehen, die als Schraub-, Niet- oder Schweißflansche ausgebildet sein können.

Die Tragteile 46 in den Figuren 2 bis 6 sind für den Einsatz in Hanglagen gerüstet und deshalb mit der Schwenkvorrichtung 44 versehen.

Die Schwenkvorrichtung 44 stellt eine Verbindung zwischen dem Tragteil 46 und einer Antriebsquelle 48 einerseits und dem als Getriebegehäuse ausgebildeten Radträger 50 andererseits her und enthält eine Konsole 52, einen Schwenkarm 54 und eine Stellvorrichtung 56. Bei Fahrzeugen 10 ohne die Schwenkvorrichtung 44 ist der Radträger 50 direkt, unbeweglich und vorzugsweise lösbar an den Tragteil 46 angeflanscht; dies wird in den Figuren 7 bis 10 dargestellt.

Das Rad 12 kann durch die Antriebsquelle 48, die in der Zeichnung nur schematisch dargestellt ist, in Drehung versetzt werden und kann sowohl als Vorder- wie auch als Hinterrad eingesetzt werden. Das Rad 12 ist über eine in eine Radnabe übergehende Ausgangswelle 65 in dem Radträger 50 drehbar gelagert.

Die Schwenkvorrichtung 44 ist derart ausgebildet, daß sie zwischen den Radträger 50 und den Tragteil 46 eingefügt werden kann und somit das für die Ebene vorgesehene Fahrzeug 10 hangtauglich macht. Es wird darauf hingewiesen, daß es grundsätzlich ausreicht, wenn nur eine Schwenkvorrichtung 44 für eines der vorderen Räder 12 vorgesehen ist. Die Größe des möglichen Hangausgleichs erhöht sich jedoch, wenn für jedes vordere Rad 12 eine Schwenkvorrichtung 44 besteht. Die Figuren 2 bis 10 zeigen nur die in Fahrtrichtung gesehen linke Hälfte des Tragteils 46 und der an ihn angeschlossenen Teile, einschließlich der Schwenkvorrichtung 44 für das linke Rad 12.

Der Tragteil 46 ist in diesem Ausführungsbeispiel vorhanden und als eine einzige Achse ausgebildet; dies ist jedoch nicht zwingend. Vielmehr kann - sofern ein Tragteil 46 überhaupt erforderlich und der Radträger 50 nicht direkt an das Fahrgestell 22 angeschlossen ist - als Tragteil 46 auch eine oder mehrere Konsolen oder dergleichen vorgesehen sein, die an die betreffenden Stellen des Fahrgestells 22 angeschlossen, insbesondere angeflanscht werden. Der Tragteil 46 dieses Ausführungsbeispiels ist als ein Achsrohr von rechteckigem Querschnitt ausgebildet und mit dem Fahrgestell 22 über fahrgestellseitige Anschlußmittel 94 verbunden. Er erstreckt sich im unteren Bereich des Fahrzeugs 10 quer zu dessen Fahrtrichtung und ist dazu bestimmt, die vorderen Räder 12 mittelbar drehbar aufzunehmen. Die fahrgestellseitigen Anschlußmittel 94 sind schematisch als Flansch dargestellt, der entsprechend den an dem Fahrgestell 22 vorgesehenen zuvor erwähnten Flanschen ebenfalls als Schraub-, Niet- oder Schweißflansch ausgebildet ist. Der Tragteil 46 ist vorzugsweise an seinen Endflächen starr oder alternativ über einen sich vertikal erstreckenden, nicht gezeigten Flansch mit der Konsole 52 verbunden. Erforderlichenfalls ist an der Konsole 52 ein Gegenflansch angebracht. Die Verbindung kann vorzugsweise mittels Schweißen hergestellt werden.

Bei der Antriebsquelle 48 handelt es sich um ein herkömmliches Mehrganggetriebe, aus dem eine Abtriebswelle 62 ragt und die den Antrieb für die vorderen Räder 12 überträgt. Diese Antriebsquelle 48 kann allerdings auch durch Druckmittelmotoren ersetzt werden.

Der als Getriebegehäuse ausgebildete Radträger 50 und das in ihm enthaltene, nicht gezeigte mehr oder weniger aufwendige Getriebe werden üblicherweise als Endantrieb bezeichnet und enthalten vorteilhafterweise eine Stirnradstufe, die eine Drehzahluntersetzung zwischen der Antriebsquelle 48 und dem vorderen Rad 12 bewirkt. Hierzu sind eine Eingangswelle 64 und eine Ausgangswelle 65 vorgesehen, die über die Stirnradstufe miteinander kämmen. Andererseits wäre auch die Verwendung eines Kettengetriebes, eines Schaltgetriebes oder eines Planetengetriebes möglich. Jedenfalls verläuft die Eingangswelle 64 parallelachsig zu der Ausgangswelle 65, so daß sich die Lage der Ausgangswelle 65 in der Höhe verändert, wenn man den Radträger 50 um die Drehachse der Eingangswelle 64 schwenkt. Die Eingangswelle 64 und die Abtriebswelle 62 verlaufen vorzugsweise koaxial. Je nach dem in dem Radträger 50 enthaltenen Getriebe und der festigkeitsmäßigen Ausbildung des Radträgers 50 kann dieser unterschiedlich ausgebildet sein und gegebenenfalls unterschiedliche Lochbilder für nicht gezeigte Gewindebohrungen aufweisen. Die Gewindebohrungen können sowohl in einem zusammenhängenden Flansch wie auch in eigenständigen Zapfen, die vorzugsweise mit Gewindebohrungen für Dehnschrauben versehen sind, enthalten sein. Ein derartiger Flansch, derartige Zapfen oder dergleichen werden allgemein als Anschlußmittel 60 bezeichnet, die bei den in Betracht kommenden Radträgern 50 gleich sind und über die der Radträger 50 an den betreffenden Tragteil 46 angeschlossen werden kann.

Alternativ hierzu könnte der Radträger 50 in seiner einfachsten Form als ein Lager oder eine Nabe ausgebildet sein, in der das Rad 12 drehbar und mit einer Antriebsquelle 48 verbunden aufgenommen ist.

Bei dem Tragteil 46, der Antriebsquelle 48 und dem Radträger 50 handelt es sich um Komponenten, die ohne jegliche Änderung sowohl an dem Fahrzeug 10 für die Ebene als auch an dem für den Hang verwendet werden können. Allerdings kann in dem Fall, daß ein Fahrzeug 10 ausschließlich für die Arbeit am Hang eingesetzt werden soll, der Flansch 58 an dem Tragteil 46 entfallen und die Konsole 52 direkt an den Tragteil 46 angeschweißt oder angeschraubt werden.

Die Konsole 52 wird in diesem speziellen Ausführungsbeispiel aus dickwandigem Stahlblech in der Art eines an seiner Unterseite teilweise offenen Gehäuses gebildet und erstreckt sich im wesentlichen parallel zu der Stirnseite des Tragteils 46 und vorzugsweise wenigstens in teilweiser vertikaler Deckung mit einer Seitenwand des Fahrgestells 22. Erwähnt seien eine innere, in der Zeichnung rechts gelegene Wand 66, eine äußere Wand 68, eine Decke 70 und ein Boden 71.

Stirnseitig ist die Konsole 52 offen, und am Boden 71 ist sie teilweise geschlossen.

Die innere Wand 66 ist über eine plane Fläche oder einen Flansch starr an den Tragteil 46 angeschweißt oder angeschraubt. Der Flansch 58 und der Gegenflansch 60 können in der einfachsten Form als zusammenpassende bearbeitete Flächen ausgebildet sein, an denen der Tragteil 46 und die Konsole 52 miteinander verbunden, z. B. verschweißt werden. In einer weiterentwickelten Ausführungsform können der Flansch 58 und der Gegenflansch 60 als Flansche ausgebildet sein, die mittels Schrauben oder Nieten miteinander verbunden werden.

In der einfachsten Form wird also die Konsole 52 an den Tragteil 46 angeschweißt, während sie bei der Benutzung von Loch-Flanschen auch angeschraubt oder angenietet werden kann. Die Verbindung mittels Flanschen kommt nicht nur aus Gründen einer möglichen Umrüstung des Tragteils 46 für den Einsatz in der Ebene bzw. am Hang in Betracht, sondern kann auch aus Fertigungsgründen so gewählt werden.

Die Decke 70 und der Boden 71 verbinden beide Wände 66, 68 starr und drehsteif miteinander, z. B. mittels einer Schweißverbindung.

Die äußere Wand 68 erstreckt sich parallel zu der inneren Wand 66 und weist die gleiche oder im wesentlichen die gleiche Form auf wie diese. Zwischen beiden Wänden 66, 68 befindet sich ein Freiraum, in dem sich die Stellvorrichtung 56 bewegen kann. Durch den Freiraum und senkrecht zu der Haupterstreckungsebene der Wände 66, 68 erstreckt sich in einem vorderen Bereich ein Bolzen 72, der in entsprechende Bohrungen in den Wänden 66, 68 aufgenommen und gesichert ist. Durch den gegenüberliegenden Endbereich erstreckt sich analog ein als eine Hülse ausgebildetes Lager 74 von wesentlich größerem Durchmesser, das jedoch beiderseits über die Wände 66, 68 übersteht und mit diesen verschweißt ist, um eine stabile Gehäuseausführung zu erbringen. Das Lager 74 erstreckt sich konzentrisch zu der Drehachse der Abtriebswelle 62 und weist zwei Stirnflächen 96 auf. Das Lager 74 befindet sich bei diesem Ausführungsbeispiel rückwärtig des Tragteils 46 und weist zu diesem einen geringen Abstand auf.

Nach alledem besteht die Konsole 52 aus einem einzigen Schweißzusammenbau, der anstelle des Radträgers 50 an den Tragteil 46 angeschlossen werden kann.

Der Schwenkarm 54 besteht aus einem ersten Schenkel 76 und einem zweiten Schenkel 78, die in diesem Ausführungsbeispiel rechtwinklig zueinander verlaufen und drehfest miteinander verbunden, nämlich verschweißt, sind. In einer weiterentwickelten Ausführungsform können die beiden Schenkel 76, 78 auch über eine Schraub- oder Vielzahn-Verbindung miteinander verbunden sein, die leicht lösbar und leicht herstellbar ist. Auf diese Weise kann jeder Schenkel 76, 78 der jeweiligen Beanspruchung entsprechend aus geeignetem Material und mittels eines geeigneten Verfahrens hergestellt werden. Beispielsweise kann der erste Schenkel 76 gedreht und an der Oberfläche hochvergütet werden, um gute Gleiteigenschaften aufzuweisen, und der zweite Schenkel 78 kann als flacher Teil in einem Gesenk geschmiedet werden, wodurch eine hohe Festigkeit erreicht wird.

Der erste Schenkel 76 weist die Form einer Büchse auf, die sich von dem Radträger 50 zu der Abtriebswelle 62 erstreckt und einen Innenraum aufweist, durch den sich bequem eine nicht gezeigte und nur im Bedarfsfall erforderliche Wellenverlängerung erstrecken kann, die die Abtriebswelle 62 mit der Eingangswelle 64 verbindet. Die äußere Oberfläche des ersten, außen rund-zylindrischen Schenkels 76 sowie die innere Oberfläche des Lagers 74 sind vergütet, um geeignete Gleit- und Festigkeitseigenschaften zur Bildung eines Gleitlagers zu erhalten. Gleichermaßen kann zwischen dem ersten Schenkel 76 und dem Lager 74 auch eine separate Gleitbüchse vorgesehen werden, und schließlich ist es sinnvoll, eine Schmiervorrichtung anzubringen - all dies ist jedoch nicht gezeigt. Anstelle der Gleitlagerung kann auch ein Nadel- oder Rollenlager Verwendung finden. Der erste Schenkel 76 ist gegen eine axiale Verschiebung nach außen, d. h. mit Blick auf die Zeichnung nach links, mittels einer Platte 80 gesichert, die stirnseitig auf ihn aufgeschraubt ist. Wie bereits erwähnt, kann innerhalb des ersten Schenkels 76 anstatt der Verbindung mit der Antriebsquelle 48 über die Abtriebswelle 62 auch ein nicht gezeigter Druckmittelmotor vorgesehen werden, der vorzugsweise zwei Geschwindigkeitsstufen aufweist und direkt auf die Eingangswelle 64 aufgesetzt ist.

Zur axialen Positionierung des ersten Schenkels 76 innerhalb des Lagers 74 sind in diesem Ausführungsbeispiel zwei Distanzringe 98 vorgesehen; es sind jedoch auch mehr oder weniger Distanzringe 98 verwendbar. Gemäß dem Ausführungsbeispiel nach Figur 2 befindet sich ein Distanzring 98 zwischen der in der Zeichnung linken Stirnfläche 96 des Lagers 74 und der Verbindungsstelle zwischen beiden Schenkeln 76, 78 und ein weiterer Distanzring 98 zwischen der in der Zeichnung rechts gelegenen Stirnfläche 96 und der Platte 80. Auf diese Weise kann der zweite Schenkel 78 und mit diesem der Radträger 50 weiter oder näher an die Konsole 52 und somit das Fahrgestell 22 heran gebracht werden, was die Möglichkeit einer Spurverstellung und der Verwendung weiterer Reifengrößen eröffnet.

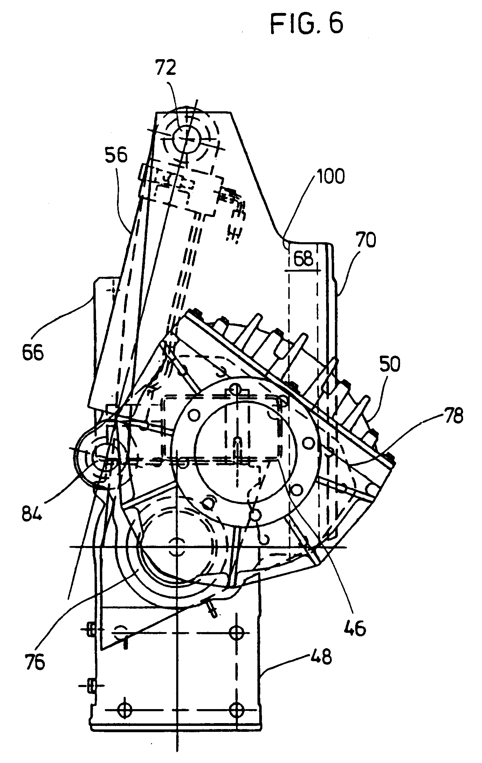

Der zweite Schenkel 78 ist als eine Platte aus hochwertigem Guß oder aus einem Schmiedeteil gebildet, die das als Flansch ausgebildete radträgerseitige Anschlußmittel 58 in einem vorderen Endbereich und eine zylindrische Öffnung 82 in einem anderen, rückwärtigen Endbereich aufweist. Das an der Außenseite angebrachte radträgerseitige Anschlußmittel 58 kann eine Verbindung mit dem als Gegenflansch ausgebildeten Anschlußmittel 60 an dem Radträger 50 eingehen und weist hierzu ein entsprechendes Lochbild auf, um den Einsatz von Schrauben zu ermöglichen. Mittels der Öffnung 82 kann der zweite Schenkel 78 den ersten Schenkel 76 nahezu ohne Spiel übergreifen, so daß beide Schenkel 76, 78 miteinander verschraubt oder verschweißt werden können. Schließlich erstreckt sich von der Innenseite des zweiten Schenkels 78 parallelachsig zu dem ersten Schenkel 76 ein Anschlag 84, der endseitig als Zapfen ausgebildet ist und an einer in Figur 6 erkennbaren Unterkante der äußeren Wand 68 zur Anlage kommen kann.

Sowohl der als Zapfen ausgebildete Anschlag 84 wie auch der Bolzen 72 können in einer erweiterten Ausführungsform als Sensorglieder mit Lastmeßvorrichtungen ausgebildet oder mit solchen versehen sein, die die Ermittlung von Lastzuständen oder des Gewichts des Inhalts des Korntanks 18 ermöglichen, wozu allerdings eine Auswertungseinrichtung erforderlich ist.

Es zeigt sich somit, daß der Schwenkarm 54 mit dem Radträger 50 um die Drehachse des Lagers 74, diein diesem Ausführungsbeispiel mit der der Abtriebswelle 62 koaxial ist, in dem Lager 74 schwenken kann, ohne daß die Koaxialität der Abtriebswelle 62 und der Eingangswelle 64 verloren geht.

Die Stellvorrichtung 56 ist in diesem Ausführungsbeispiel als ein linear wirkender, doppelseitig beaufschlagbarer Hydraulikmotor ausgebildet, der einen Kolben 86 und einen Zylinder 88 umfaßt und von einer nicht gezeigten Steuer- oder Regelvorrichtung beaufschlagt wird.

Während das zylinderseitige Ende der Stellvorrichtung 56 auf dem Bolzen 72 schwenkbar gelagert ist, greift dessen kolbenstangenseitiges Ende an dem Anschlag 84 auf dessen als Zapfen ausgebildeten Endbereich schwenkbar an. In einer eingefahrenen Stellung liegt der Anschlag 84 an der Unterkante der äußeren Wand 68 an, und die Stellvorrichtung 56 ragt teilweise nach unten aus der Konsole 52 heraus. In einer ausgefahrenen Stellung der Stellvorrichtung 56 bewegt sich sowohl die Stellvorrichtung 56 als auch der Radträger 50 nach unten aus der Konsole 52 heraus bzw. über diese hinaus. Infolge einer Aktivierung der Stellvorrichtung 56 wird demnach der Radträger 50 mit dem Schwenkarm 54 in dem Lager 74 gedreht. Es ist mit Blick auf Figur 6 ersichtlich, daß der Radträger 50 entgegen dem Uhrzeigerdrehsinn um die Längsmittenachse des Lagers 74 schwenkt, sobald die Stellvorrichtung 56 ausgefahren wird. Diese Schwenkbewegung bewirkt, daß sich der Abstand zwischen dem Tragteil 46 und der Aufstandsfläche des Rades 12 verändert und das Fahrgestell 22, also das gesamte Fahrzeug zumindest auf einer Seite angehoben wird.

Die Stellvorrichtung 56 wird auf nicht gezeigte Weise von einem Hydraulikschaltkreis betätigt, in dem eine Druckquelle und wenigstens ein Mehrwege-Stellungsventil vorgesehen sind. Das Mehrwege-Stellungsventil wird vorzugsweise von Elektromagneten geschaltet, die ihre Steuersignale von einem Regelkreis erhalten. Der Regelkreis enthält eine bekannte Pendelbox oder Quecksilberwaage, die eine seitliche Neigung des Fahrzeugs 10 erfaßt und daraus ein Ausgangssignal bildet, das zum Ziel hat, durch Ein- oder Ausfahren der Stellvorrichtung 56 das Fahrzeug 10 in der Waagrechten zu halten.

In die Konsole 52 ist ein Leitungsführungsrohr 100 eingeschweißt, durch das zu der Stellvorrichtung 56 führende, nicht näher gezeichnete Hydraulikschläuche geführt sind, so daß sie keiner mechanischen Beanspruchung ausgesetzt und deshalb geschützt sind. Das Leitungsführungsrohr 100 ist in den Figuren 2 bis 5 nicht eingezeichnet, um eine Unübersichtlichkeit zu vermeiden.

Der Regelkreis kann auch von einem manuell betätigbaren Schalter aus gesteuert und überbrückt werden, der einen Betriebs- und einen Außerbetriebszustand einleiten kann. In dem Betriebszustand wird zwischen einem Ruhe- und einem Voll-Betriebszustand unterschieden. In dem Ruhe-Betriebszustand werden die beiden Stellvorrichtungen 56 je zur Hälfte ausgefahren, so daß das Fahrzeug 10 in seinem vorderen Bereich angehoben wird und gegenüber dem Boden die richtige Stellung einnimmt. In dieser Stellung verharren die Stellvorrichtungen 56. In dem Vollbetriebszustand können die beiden Stellvorrichtungen 56 wechselweise voll ein- oder voll ausgefahren werden, um das Fahrzeug 10 auf der linken oder der rechten Seite anzuheben bzw. abzusenken.

Es ist darüber hinaus möglich, in dem Außerbetriebszustand eine weitere Schaltung einzurichten, nach der auf eine manuelle Betätigung hin beide Stellvorrichtungen 56 voll ausgefahren werden, was bei der Verladung des Fahrzeugs 10 auf einem Tieflader, zu Wartungszwecken oder bei der Aufnahme oder dem Absetzen bestimmter Vorsätze dienlich sein kann.

Die Schwenkvorrichtung 44 ist in diesem Ausführungsbeispiel dahingehend weiterentwickelt, daß mittels des Verstellwegs des Schwenkarms 54 bzw. des Radträgers 50 auch ein Signal für die Verstellung einer weiteren Komponente gewonnen werden kann, die ebenfalls in eine von der Hangneigung abhängige Stellung gebracht werden soll. Bei Mähdreschern muß z. B. das Schneidwerk, das infolge einer Verschwenkung des Fahrgestells 22 in die Waagerechte ebenfalls mitschwenkt, in eine zu dem Boden parallele Lage gebracht bzw. in dieser gehalten werden. Hierzu ist ein Geberglied 90 vorgesehen, das ebenfalls als ein doppelt- und linearwirkender Hydraulikmotor ausgebildet ist. Dieses Geberglied 90 ist einenends (zylinderseitig) über Laschen 92 an dem Tragteil 46 und anderenends (kolbenstangenseitig) exzentrisch an der Platte 80 jeweils schwenkbar angeschlossen. In der Zeichnung nicht gezeigte Leitungen verbinden die jeweiligen Druckkammern dieses Geberglieds 90 mit denen eines Nehmerglieds, das an der anderen schwenkbar angebrachten Komponente, z. B. dem Schneidwerk, angreift. Es ist ersichtlich, daß infolge eines Schwenkvorgangs des Schwenkarms 54 über den ersten Schenkel 76 und die Platte 80 das Geberglied 90 in seiner Länge verändert wird, so daß aus diesem Druckflüssigkeit heraus und durch die Leitung zu dem Nehmerglied gedrückt wird.

Der Anlenkpunkt des Geberglieds 90 an der Platte 80 und die Lage der Stellvorrichtung 56 gegenüber dem Anschlag 84 und dem Bolzen 72 sind veränderlich zu gestalten, wenn die Distanzringe 98 verwendet werden und die axiale Lage des ersten Schenkels 76 in der Hülse 74 verändert wird.

In den Hydraulikkreis des Geberglieds 90 und des Nehmerglieds kann auch eine Schneidwerkshöhenführung mit Querausgleich integriert werden, die einen solchen Vorsatz des als Landmaschine ausgebildeten Fahrzeugs 10 zu der Hangsteuerung auch noch stets parallel zu dem Boden führt, um die Abweichung von der Parallelen aufgrund eines eingesunkenen Rades, einer Furche oder einer Reifendeformation beim Fahren am Hang auszugleichen. Diese Schneidwerkshöhenführung könnte ebenso direkt auf die Stellvorrichtungen 56 wirken.

Ein solches Nehmerglied kann auch auf andere hangneigungsabhängig gesteuerte Komponenten, wie Leitbleche auf den Sieben oder dem Vorbereitungsboden oder die Stellung des Siebkastens wirken.

Ist von vornherein beabsichtigt, das Fahrzeug 10 nur hangtauglich auszubilden, wird die Schwenkvorrichtung 44 über die Konsole 52, wie bisher beschrieben, direkt an den Tragteil 46 angeschweißt, so daß sich eine Achse aus einem einheitlichen Schweißzusammenbau ergibt, der mit den fahrgestellseitigen Anschlußmitteln 94 an die entsprechenden Anschlußmittel an dem Fahrgestell 22 angebracht werden kann.

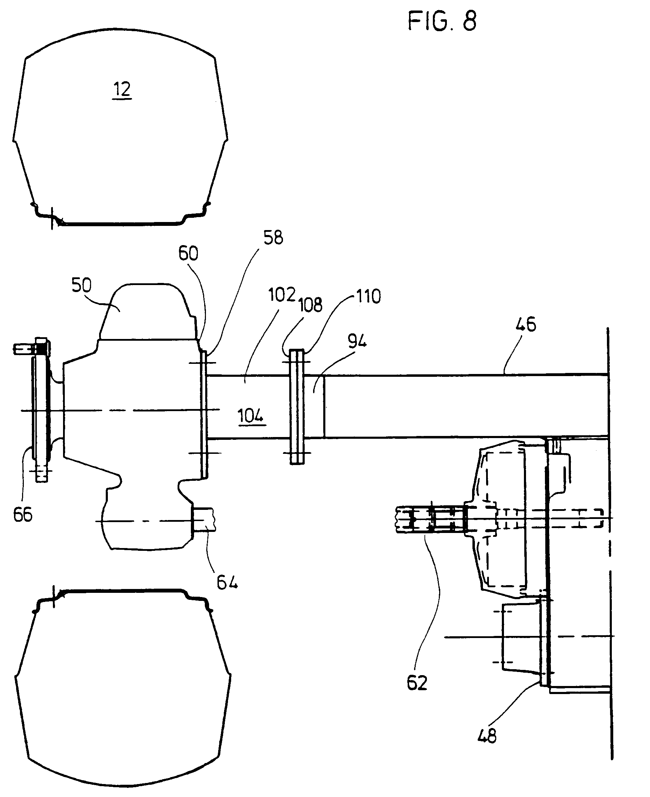

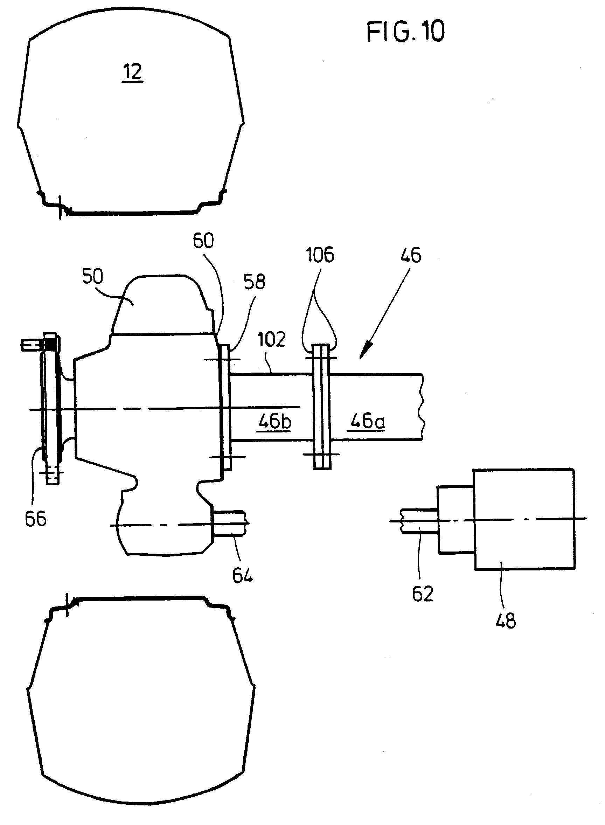

Allerdings kann das Fahrzeug 10 auch als eine hauptsächlich auf der Ebene zu betreibende Maschine gebaut werden, bei der der Radträger 50 direkt mit seinem als Flansch ausgebildeten Anschlußmittel 60 an den Tragteil 46 starr angebracht wird. In diesem Fall wird ein Tragteil 46 gebildet, bei dem alle mit der Schwenkvorrichtung 44 in Verbindung stehenden Teile fehlen. Ein derartiger vorzugsweise als Achse ausgebildeter Tragteil 46 ist in den Figuren 7 bis 10 gezeigt und weist einen Tragteil 46 auf, der insgesamt um die Breite der Schwenkvorrichtung 44 länger ist als der Tragteil 46 mit Schwenkvorrichtung 44, wobei gemäß den Figuren 8 und 10 der Tragteil 46 zweiteilig ausgebildet ist, und die der Schwenkvorrichtung 44 entsprechende Länge von einem Zwischenstück 102 überbrückt wird.

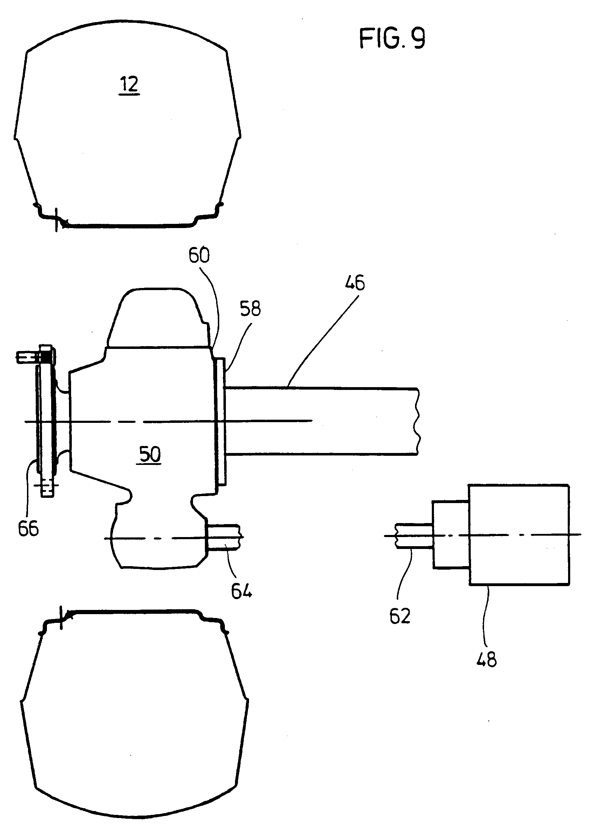

Dementsprechend ist in den Figuren 8 und 10 ein Tragteil 46 gezeigt, der dem nach den Figuren 7 und 9 im wesentlichen entspricht, der aber über ein Zwischenstück 102 an dem Radträger 50 angreift. Dieses Zwischenstück 102 entspricht dem Abstand zwischen dem Ende des Tragteils 46 und dem Anschlußmittel 60 an dem Radträger 50, wenn die Schwenkvorrichtung 44 verwendet wird. Das Zwischenstück 102 setzt sich aus einem Rohrteil 104, dem als Platte ausgebildeten radträgerseitigen Anschlußmittel 58 und einer ebenfalls ein Anschlußmittel darstellenden Platte 108 zusammen, wobei das radträgerseitige Anschlußmittel 58 an das Anschlußmittel 60 des Radträgers 50 und die Platte 108 an einen wiederum als Anschlußmittel ausgebildeten Flansch 110 an der außenliegenden Stirnfläche des Tragteils 46 angeschraubt wird. Auf diese Weise wird für den als Achse ausgebildeten Tragteil 46 für den Einsatz in der Ebene und für den zum Einsatz am Hang der gleiche Tragteil 46 verwendet, wobei der Abstand wahlweise mittels der Schwenkvorrichtung 44 oder dem Zwischenstück 102 überbrückt wird. Die Konsole 52 und das Zwischenstück 102 können an den Tragteil 46 jeweils angeschraubt, angenietet oder angeschweißt werden.

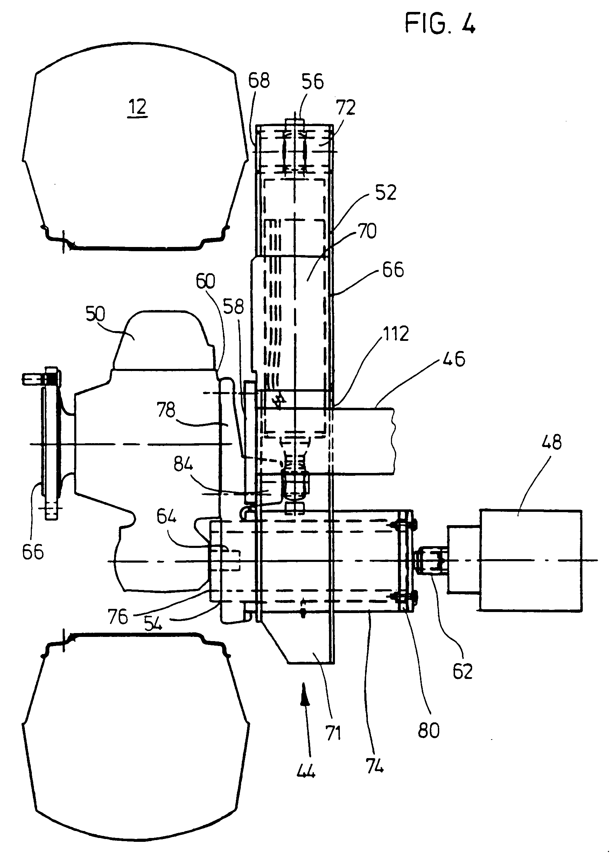

Der in den Figuren 4, 5, 9 und 10 gezeigte Tragteil 46 stellt gegenüber den eingangs beschriebenen Tragteilen 46 eine alternative Form des mittelbaren Anschlusses des Radträgers 50 an das Fahrgestell 22 dar. Der Radträger 50 könnte ebenso direkt an das Fahrgestell 22 angeschlossen werden, wenn an diesem entsprechende Anschlußmittel vorgesehen sind.

In diesem Fall ist der Tragteil 46 als ein Achsstück ausgebildet; er kann aber auch als eine einfache Strebe, ein Winkeleisen, eine Plattform oder dergleichen Verbindungselement ausgebildet sein. Es kann je Rad 12 ein eigener Tragteil 46 vorgesehen werden; es können aber auch mehrere Tragteile 46 zu einem gemeinsamen Tragteil, Fahrgestell, Achse oder dergleichen zusammengefaßt sein.

Bei dem alternativen Ausführungsbeispiel nach den Figuren 4, 5, 9 und 10 ist die Antriebsquelle 48 nicht an das Fahrgestell 22 angeflanscht, sondern es ist angedeutet, daß sich die Antriebsquelle 48 an beliebiger Stelle des Fahrzeugs 10 befindet und in vielfältiger Weise, insbesondere als ein mechanisches oder hydrostatisches Getriebe, das eine Abtriebswelle 62 aufweist, die mit der Eingangswelle 64 in drehfester Verbindung steht, ausgebildet werden kann. Die Antriebsquelle 48 kann aber auch so angeordnet sein, daß die Abtriebs- und die Eingangswelle 62 und 64 nicht - wie dargestellt - koaxial zueinander, sondern zueinander versetzt verlaufen; in diesem Fall würde man eine Gelenkwelle zur Antriebsübertragung verwenden. Schließlich könnte die Antriebsquelle 48 aber auch direkt an den Radträger 50 und auf die Eingangswelle 64 geflanscht sein und die Antriebsübertragung mittels einer Muffe oder einer sonstigen Kupplung erfolgen. Jede Art einer Verbindung zwischen der Abtriebs- und der Eingangswelle 62, 64 kann drehfest absolut starr, aber auch mit Torsionsdämpfern versehen hergestellt sein.

In dem in Figur 9 gezeigten Ausführungsbeispiel ist der Radträger 50 mittels des radträgerseitigen Anschlußmittels 58 und des an ihm vorgesehenen Anschlußmittels/Gegenflansch 60 lösbar angeschlossen. Hierzu dienen in bekannter Weise nicht gezeigte Schrauben.

Gemäß Figur 4 ist die Schwenkvorrichtung 44 so ausgebildet, daß sie an ein Fahrzeug 10 mit einem Tragteil 46 nach Figur 9 angeschlossen werden kann und dieses Fahrzeug 10 somit hangtauglich macht.

Auf der dem Betrachter in Figur 4 zugelegenen, oberen Seite der Konsole 52 ist in jede Wand 66, 68 jeweils ein Ausschnitt 112 eingebracht, dessen Querschnitt ausreichend groß ist, um den Tragteil 46 in sich aufnehmen zu können. Es ist aber auch möglich, den Tragteil 46 direkt auf die Oberseite der Konsole 52 aufzusetzen und vorzugsweise lösbar anzuschließen. Der Tragteil 46 ist bei dem Ausführungsbeispiel nach Figur 4 derart mit der Konsole 52 verbunden, daß das radträgerseitige Anschlußmittel 58 an der Außenseite der äußeren Wand 68 anliegt und mit dieser über die vorgenannten Schrauben verbunden ist. Demnach bleibt die Erstreckung des Tragteils 46 in der Richtung der Drehachse des Rades 12 bis hierher die gleiche wie bei einem starr angefügten Radträger 50.

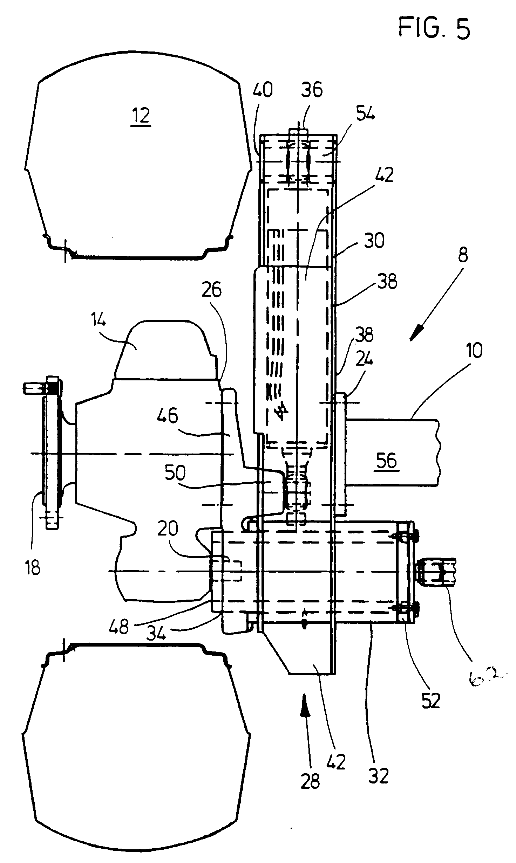

Figur 10 zeigt einen Tragteil 46, der im wesentlichen dem in Figur 9 gezeigten entspricht. Der Unterschied besteht darin, daß gemäß Figur 9 der Tragteil 46 einteilig ausgebildet ist und direkt bis zu dem Radträger 50 reicht, während er in Figur 10 aus einem ersten und einem zweiten Teil 46a und 46b besteht, wobei der erste Teil 46a mit dem Fahrgestell 22 verbunden ist und radträgerseitig ebenfalls einen Flansch 58 trägt. Der zweite Teil 46b ist als ein Zwischenstück 102 ausgebildet, das beidenends ebenfalls mit einem Anschlußmittel/Flansch 58 versehen ist und mit diesem an das Anschlußmittel/Gegenflansch 60 des Radträgers 50 und an das radträgerseitige Anschlußmittel 58 des ersten Teils 46a anschraubbar ist. Die Länge des Zwischenstücks 102, dessen Querschnitt dem des ersten Teils 46a entsprechen kann, entspricht vorzugsweise wenigstens der Breite der Konsole 52, d. h. deren Erstreckung in der Richtung der Drehachse des Rades 12. Es ist mitunter aber auch vorteilhaft, das Zwischenstück 102 länger auszubilden als die Breite der Konsole 52, was in Verbindung mit Figur 5 näher erläutert wird.

Figur 5 zeigt eine Schwenkvorrichtung 44, die der nach Figur 4 mit Ausnahme der Ausschnitte 112 entspricht - letztere fehlen bei dieser Ausführungsform. Gemäß Figur 5 ist die Konsole 52 der Schwenkvorrichtung 44 mit ihrer inneren Wand 66 an das radträgerseitige Anschlußmittel 58 des ersten Teils 46a des Tragteils 46 anstatt des Zwischenstücks 102 angeschraubt. Im übrigen ist die Anordnung wie in Figur 4 mit den gleichen Ausbildungsmöglichkeiten getroffen.

Wie zuvor erwähnt, kann das Zwischenstück 102 auch länger ausgebildet sein als die Breite der Konsole 52 ausmacht. Insbesondere kann das Zwischenstück 102 inklusive seiner Anschlußmittel/Flansche 58 so lang sein wie der Abstand zwischen der Anschlußfläche des zweiten Schenkels 78 an dem Radträger 50 und der Anschlußfläche der inneren Wand 66 an dem radträgerseitigen Anschlußmittel 58 des ersten Teils 46a des Tragteils 46, so daß sich bei einem Austausch des Zwischenstücks 102 gegen die Schwenkvorrichtung 44 oder umgekehrt die relative Lage des Rades 12 zu dem Fahrgestell 22 und somit die Baubreite überhaupt nicht ändert.

Nach alledem kann die Umrüstung eines für die Ebene tauglichen Fahrzeugs 10 zur Benutzung am Hang durch folgendes Verfahren erfolgen, wobei zunächst davon ausgegangen wird, daß das Rad 12 an dem Fahrgestell 22 mittels des Radträgers 50 direkt angebracht ist.

Die Verfahrensschritte sind folgende:
a) der Radträger 50 wird von dem Fahrgestell 22 getrennt und
b) zwischen den Radträger 50 und das Fahrgestell 22 wird die Schwenkvorrichtung 44 eingefügt, in der der Radträger 50 exzentrisch und vertikal schwenkbar aufgenommen ist.

Ist ein Fahrgestell 22 vorgesehen, an dem das Rad 12 mittels des Radträgers 50 und eines Tragteils 46 angebracht ist, kennzeichnet sich das Verfahren durch folgende Verfahrensschritte:
a) der Radträger 50 wird von dem Tragteil 46 getrennt,
b) der Tragteil 46 wird erforderlichenfalls um die Breite der Schwenkvorrichtung 44 gekürzt und
c) zwischen den Radträger 50 und den Tragteil 46 wird die Schwenkvorrichtung 44 eingefügt, in der der Radträger 50 exzentrisch und vertikal schwenkbar aufgenommen ist.

Das letztgenannte Verfahren ist umso einfacher durchzuführen, wenn die Kürzung des Tragteils 46 durch die Demontage des Zwischenstücks 102 des Tragteils 46 erfolgt.

Das Fahrzeug 10 kann also leicht und sogar nachträglich in ein hangtaugliches Fahrzeug 10 umgebaut werden, indem man die geeignete Kombination aus Tragteil 46, Schwenkvorrichtung 44 und gegebenenfalls Zwischenstück 102 benutzt.

Das Fahrzeug 10 kann also leicht und nachträglich in ein hangtaugliches Fahrzeug 10 umgebaut werden, indem man - sofern vorhanden - den Radträger 50 von dem Tragteil 46 bzw. dessen Zwischenstück 102 trennt, die Konsole 52 dazwischenfügt, den Radträger 50 an den Schwenkarm 54 anschraubt und in die Konsole 52 einschiebt, die Stellvorrichtung 56 anschließt und die Antriebsquelle 48 mit der Eingangswelle 64 erforderlichenfalls über eine Wellenverlängerung oder eine Gelenkwelle drehfest verbindet, wobei letzteres entfallen kann, wenn die Antriebsquelle 48 direkt auf die Eingangswelle 64 aufgesetzt ist. Ein Bausatz zum Umrüsten des Fahrzeugs 10 enthält zu diesem Zweck die Konsole 52, den Schwenkarm 54, die Stellvorrichtung 56 und erforderlichenfalls eine Wellenverbindung.

## Patentansprüche

1. Fahrzeug, insbesondere Landmaschine, mit einem oder mehreren zusammengesetzten Tragteilen (46) und einem an diesen angeschlossenen Radträger (50) für ein insbesondere angetriebenes Rad (12), die an jeweiligen Trennstellen miteinander und mit einem Fahrgestell (22) lösbar verbindbar sind, mit einer Schwenkvorrichtung (44) zur Höhenverstellung des Rades (12) gegenüber dem Fahrgestell (22), dadurch gekennzeichnet, daß die Schwenkvorrichtung dem Radträgger (50) wahlweise vorschaltbar ist, wobei die Anschlüsse der Schwenkvorrichtung (44) bzw. des Tragteils (46) den Anschlüssen ohne Verwendung der Schwenkvorrichtung (44) entsprechen.

2. Fahrzeug nach Anspruch 1, dadurch gekennzeichnet, daß der Radträger (50) als Getriebegehäuse (50) ausgebildet und an einen Schwenkarm (54) anschließbar ist.

3. Fahrzeug nach Anspruch 1 oder 2, dadurch gekennzeichnet, daß der Radträger (50) anstelle einer ihn mittels eines Schwenkarms (54) tragenden Konsole (52) mittelbar oder unmittelbar an das Fahrgestell (22) anschließbar, insbesondere anflanschbar, ist und eine Eingangswelle (64) aufweist, die parallelachsig zu einer aus ihm tretenden Ausgangswelle (65) verläuft.

4. Fahrzeug nach einem oder mehreren der vorherigen Ansprüche, dadurch gekennzeichnet, daß die Eingangswelle (64) koaxial zu einer Abtriebswelle (62) einer Antriebsquelle (48) und der Schwenkachse der Schwenkvorrichtung (44) verläuft.

5. Fahrzeug nach einem oder mehreren der vorherigen Ansprüche, dadurch gekennzeichnet, daß der Schwenkarm (54) einen ersten und einen zweiten Schenkel (76, 78) enthält, die lösbar, z. B. mittels einer Verzahnung oder unlösbar, z. B. mittels einer Schweißverbindung, miteinander verbunden und aus der jeweiligen Funktion angepaßten Werkstoffen hergestellt sind.

6. Fahrzeug nach einem oder mehreren der vorherigen Ansprüche, dadurch gekennzeichnet, daß der Schwenkarm (54) einen insbesondere als Lager für eine Stellvorrichtung (56) zum Verschwenken des Schwenkarms (54) ausgebildeten Anschlag (84) enthält.

7. Fahrzeug nach einem oder mehreren der vorherigen Ansprüche, dadurch gekennzeichnet, daß ein insbesondere als ein doppelt und linear wirkender Hydraulikmotor ausgebildetes Geberglied (90) an dem Schwenkarm (54), dem Rad (12) oder dem Radträger (50) angreift.

8. Fahrzeug nach einem oder mehreren der vorherigen Ansprüche, dadurch gekennzeichnet, daß die Konsole (52) ein Leitungsführungsrohr (100) enthält.

9. Fahrzeug nach einem oder mehreren der vorherigen Ansprüche, dadurch gekennzeichnet, daß die Konsole (52) ein vorzugsweise als Hülse ausgebildetes Lager (74) enthält, in dem der erste Schenkel (76) drehbar gelagert ist, wobei zwischen den Endflächen des Lagers (74) und dem ersten Schenkel (76) Distanzringe (98) einsetzbar sind.

10. Fahrzeug nach einem oder mehreren der vorherigen Ansprüche, dadurch gekennzeichnet, daß an dem Fahrgestell (22) und/oder dem Tragteil (46), an dem Radträger (50), an der Schwenkvorrichtung (44) und an gegebenenfalls vorgesehenen Zwischenstücken (102) zwischen dem Tragteil (46) und der Schwenkvorrichtung (44) flanschartige Anschlußmittel (106) mit jeweils zusammenpassenden, vorzugsweise mehreren Lochbildern vorgesehen sind.

11. Fahrzeug nach einem oder mehreren der vorherigen Ansprüche, dadurch gekennzeichnet, daß die Länge eines Zwischenstücks (102) zum Anschluß an den Tragteil (46) im wesentlichen der Breite der Schwenkvorrichtung (44) entspricht.

12. Fahrzeug nach einem oder mehreren der vorherigen Ansprüche, dadurch gekennzeichnet, daß die Konsole (52) der Schwenkvorrichtung (44) eine innere und eine äußere Wand (66, 68) enthält, wobei das Fahrgestell (22) oder der Tragteil (46) an der inneren oder der äußeren Wand (66, 68) anschließbar ist.

13. Fahrzeug nach einem oder mehreren der vorherigen Ansprüche, dadurch gekennzeichnet, daß beide Wände (66, 68) Ausschnitte (112) zur Aufnahme des Tragteils (46) aufweisen.

14. Fahrzeug nach einem oder mehreren der vorherigen Ansprüche, dadurch gekennzeichnet, daß die Eingangs- und die Abtriebswelle (64, 62) über eine Gelenkwelle miteinander verbunden sind oder die Antriebsquelle (48) als insbesondere zwei- mehrstufiger Geschwindigkeitsmotor ausgebildeter Druckmittelmotor innerhalb des ersten Schenkels (76) angeordnet direkt auf die Eingangswelle (64) aufgesetzt ist.

15. Fahrzeug nach einem oder mehreren der vorherigen Ansprüche, dadurch gekennzeichnet, daß sich die Konsole (52) wenigstens teilweise unterhalb einer Seitenwand des Fahrgestells (22) oder zwischen den Seitenwänden erstreckt.

16. Fahrzeug nach einem oder mehreren der vorherigen Ansprüche, dadurch gekennzeichnet, daß die Stellvorrichtung (56) über einen Bolzen (72) an der Konsole (52) und/oder dem Schwenkarm (54) angreift, wobei der Bolzen (72) als Sensorglied ausgebildet ist und auf eine Auswerteinrichtung wirkt, mittels der insbesondere das Gewicht oder eine Gewichtszunahme der Landmaschine ermittelbar ist.

17. Fahrzeug nach einem oder mehreren der vorherigen Ansprüche, dadurch gekennzeichnet, daß die Stellvorrichtung (56) zwei in Zylindern (88) geführte Kolben (86) aufweist, die in einem Außerbetriebszustand beide ausoder eingefahren, in einem Ruhe-Betriebszustand beide halb ausgefahren und/oder in einem Voll-Betriebszustand voll aus- bzw. einfahrbar sind.

18. Fahrzeug nach einem oder mehreren der vorherigen Ansprüche, gekennzeichnet durch eine Sicherheitsschaltung derart, daß beide Stellvorrichtungen (56) eingefahren werden, wenn an einer ein Schaden in der Druckmittelzufuhr eintritt.

19. Fahrzeug nach einem oder mehreren der vorherigen Ansprüche, dadurch gekennzeichnet, daß der Radträger (50) Befestigungszapfen zur Aufnahme von Dehnschrauben aufweist, die in den zweiten Schenkel (78) einsetzbar sind.

20. Fahrzeug nach einem oder mehreren der vorherigen Ansprüche, dadurch gekennzeichnet, daß die Stellvorrichtung (56) mit einem Hydrauliksystem für einen Höhenausgleich eines Vorsatzes quer zur Fahrtrichtung verbunden ist, das den Vorsatz unabhängig von einer Hangneigung parallel zu dem Boden führt.

## Claims

1. A vehicle, especially an agricultural machine, with one or a plurality of assembled support parts (46) and a wheel carrier (50) connected thereto, for a wheel (12), especially a driven wheel, which can be releasably connected together and to a vehicle chassis (22) at respective parting locations, with a swivelling device (44) for height adjustment of the wheel (12) relative to the vehicle chassis (22), characterized in that the swivelling device can be selectively coupled in ahead of the wheel carrier (50), wherein the attachment of the swivelling device (44) and of the support part (46) respectively correspond to the attachments without use of the swivelling device (44).

2. A vehicle according to claim 1 or 2, characterized in that the wheel carrier (50) is in the form of a gearbox housing (50) and can be connected to a pivoting arm (54).

3. A vehicle according to claim 1 or 2, characterized in that the wheel carrier (50) can be connected, especially by flanges, directly or indirectly to the vehicle chassis (22) in place of a bracket (52) carrying the wheel carrier by means of a pivoting arm (54) and has an input shaft (64) which is axially parallel to a output shaft (65) emerging therefrom.

4. A vehicle according to one or more of the preceding claims, characterized in that the input shaft (64) is coaxial with a driven shaft (62) of a drive source (48) and with the pivotal axis of the swivelling device (44).

5. A vehicle according to one or more of the preceding claims, characterized in that the pivoting arm (54) has first and second limbs (76, 78), which are connected together releasably, e.g. by means of splines, or non-releasably, e.g. by means of a welded joint, and are made from materials matched to their respective functions.

6. A vehicle according to one or more of the preceding claims, characterized in that the pivoting arm (54) has a stop (84) formed especially as a bearing for a positioning device (56) for turning the pivoting arm (54).

7. A vehicle according to one or more of the preceding claims, characterized in that a sensor member (90) formed especially as a double acting and linear hydraulic motor engages the pivoting arm (54), the wheel (12) or the wheel carrier (50).

8. A vehicle according to one or more of the preceding claims, characterized in that the bracket (52) includes a line guide tube (100).

9. A vehicle according to one or more of the preceding claims, characterized in that the bracket (52) includes a bearing (74) formed for preference as a sleeve, in which the first limb (76) is rotatably mounted, wherein spacer rings (98) can be fitted between the end surface of the bearing (74) and the first limb (76).

10. A vehicle according to one or more of the preceding claims, characterized in that flange-like attachment means (106) are provided on the vehicle chassis (22) and/or the support part (46), on the wheel carrier (50), on the swivelling device (44) and on optionally provided intermediate parts (102) provided between the support part (46) and the swivelling device (44), and are provided with respective matching patterns of preferably a plurality of holes.

11. A vehicle according to one or more of the preceding claims, characterized in that the length of a intermediate part (102) for attachment to the support part (46) corresponds substantially to the width of the swivelling device (44).

12. A vehicle according to one or more of the preceding claims, characterized in that the bracket (52) of the swivelling device (44) has inner ad outer walls (66, 68), wherein the vehicle chassis (22) or the support part (46) can be connected to the inner or the outer wall (66, 68).

13. A vehicle according to one or more of the preceding claims, characterized in that both walls (66, 68) have cut-outs (112) for reception of the support part (46).

14. A vehicle according to one or more of the preceding claims, characterized in that the input and driven shafts (64, 62) are connected together by a articulated shaft or the drive source (48) is in the form of a pressure medium motor formed especially as a two-speed or multi-speed motor, within the first limb (76) arranged directly on the input shaft (64).

15. A vehicle according to one or more of the preceding claims, characterized in that the bracket (52) extends at least partially below a sidewall of the vehicle chassis (22) or between the sidewalls.

16. A vehicle according to one or more of the preceding claims, characterized in that the positioning device (56) engages the bracket (52) and/or the pivoting arm (54) through a pin (72), the pin (72) being in the form of a sensor member and acting on a processing device, by means of which the weight in particular or the load of the agricultural machine can be detected.

17. A vehicle according to one or more of the preceding claims, characterized in that the positioning device (56) comprises two pistons (86) which are guided in cylinders (88) and are both extended or retracted on a non-operative state, are both half extended in a rest operating state and/or are fully extensible or retractable in a full operating state.

18. A vehicle according to one or more of the preceding claims, characterized by a safety circuit such that both positioning devices (56) are retracted when there is damage to the pressure medium supply to one of them.

19. A vehicle according to one or more of the preceding claims, characterized in that the wheel carrier (50) has attachment journals for reception of necked bolts, which can be fitted in the second limb (78).

20. A vehicle according to one or more of the preceding claims, characterized in that the positioning device (56) is connected to a hydraulic system for equalising the height of an accessory transverse to the direction of travel, which guides the adaptor parallel to the ground independent of any side slope.

## Revendications

1. Véhicule, notamment machine agricole, comportant un ou plusieurs éléments de support assemblés (46) et un support de roue (50) raccordé à ces éléments de support, pour une roue notamment motrice (12), ces éléments de support pouvant être reliés de façon amovible entre eux et à un châssis (22) au niveau de points de séparation respectifs, et comportant un dispositif de pivotement (44) permettant le réglage en hauteur de la roue (12) par rapport au châssis (22), caractérisé en ce que le dispositif de pivotement peut être inséré au choix en avant du support de roue (50), les raccords du dispositif de pivotement (44) et de la partie de support (46) correspondant aux raccords sans l'utilisation du dispositif de pivotement (44).

2. Véhicule selon la revendication 1, caractérisé en ce que le support de roue (50) est agencé sous la forme d'un boitier de transmission (50) et peut être raccordé au bras pivotant (54).

3. Véhicule selon la revendication 1 ou 2, caractérisé en ce que le support de roue (50) peut être raccordé, notamment par bride, directement ou indirectement au châssis (22), à la place d'une console (52) portant ce support de roue à l'aide d'un bras pivotant (54), et comporte un arbre d'entrée (64), dont l'axe s'étend parallèlement à un arbre de sortie (65) qui sort du support de roue.

4. Véhicule selon une ou plusieurs des revendications précédentes, caractérisé en ce que l'arbre d'entrée (64) est coaxial à un arbre mené (62) d'une source motrice (48) et à l'axe de pivotement du dispositif de pivotement (44).

5. Véhicule selon une ou plusieurs des revendications précédentes, caractérisé en ce que le bras pivotant (54) comporte des première et seconde branches (76,78), qui sont reliées entre elles de façon amovible, par exemple au moyen d'une denture, ou de façon inamovible, par exemple au moyen d'une liaison soudée, et sont fabriquées avec des matériaux adaptés à la fonction respective.

6. Véhicule selon une ou plusieurs des revendications précédentes, caractérisé en ce que le bras pivotant (54) contient une butée (84) qui est agencée notamment sous la forme d'un palier pour un dispositif de réglage (56) pour le pivotement du bras pivotant (54).

7. Véhicule selon une ou plusieurs des revendications précédentes, caractérisé en ce qu'un transmetteur (90), agence notamment sous la forme d'un moteur hydraulique à double effet et à action linéaire, attaque le bras pivotant (54), la roue (12) ou le support de roue (50).

8. Véhicule selon une ou plusieurs des revendications précédentes, caractérisé en ce que la console (52) contient un tube (100) pour le guidage de canalisations.

9. Véhicule selon une ou plusieurs des revendications précédentes, caractérisé en ce que la console (52) contient un palier (74) agencé de préférence sous la forme d'une douille et dans lequel la première branche (76) est montée de manière à pouvoir pivoter, des bagues entretoises (98) pouvant être insérées entre les surfaces d'extrémité du palier (74) et la première branche (76).

10. Véhicule selon une ou plusieurs des revendications précédentes, caractérisé en ce que des moyens de raccordement en forme de brides (106) comportant des réseaux de trous adaptés, de préférence plusieurs réseaux de trous, sont prévus sur le châssis (22) et/ou sur la partie de support (46), sur le support de roue (50), sur le dispositif de pivotement (44) et sur des éléments intercalaires (102) éventuellement prévus entre la partie de support (46) et le dispositif de pivotement (44).

11. Véhicule selon une ou plusieurs des revendications précédentes, caractérisé en ce que la longueur d'un élément intercalaire (102) pour le raccordement à la partie de support (46) correspond essentiellement à la largeur du dispositif de pivotement (44).

12. Véhicule selon une ou plusieurs des revendications précédentes, caractérisé en ce que la console (52) du dispositif de pivotement (44) contient une paroi intérieure et une paroi extérieure (66,68), le châssis (22) ou l'élément de support (46) pouvant être raccordé à la paroi intérieure ou à la paroi extérieure (66,68).

13. Véhicule selon une ou plusieurs des revendications précédentes, caractérisé en ce que les deux parois (66,68) comportent des découpes (112) pour loger la partie de support (46).

14. Véhicule selon une ou plusieurs des revendications précédentes, caractérisé en ce que l'arbre d'entrée et l'arbre mené (64,62) sont reliés entre eux par l'intermédiaire d'un arbre de transmission, ou la source d'entraînement (48) en tant que moteur à fluide comprimé agencé notamment sous la forme d'un moteur de vitesse à deux ou plusieurs étages est montée directement sur l'arbre d'entrée (64) en étant disposée à l'intérieur de la première branche (76).

15. Véhicule selon une ou plusieurs des revendications précédentes, caractérisé en ce que la console (52) s'étend au moins en partie au-dessous d'une paroi latérale du châssis (22) ou entre les parois latérales.

16. Véhicule selon une ou plusieurs des revendications précédentes, caractérisé en ce que le dispositif de réglage (56) attaque, par l'intermédiaire d'un boulon (72) la console (52) et/ou le bras pivotant (54), le boulon (72) étant agencé sous la forme d'un capteur et agissant sur un dispositif d'évaluation, à l'aide duquel on peut déterminer notamment le poids ou un accroissement du poids de la machine agricole.

17. Véhicule selon une ou plusieurs des revendications précédentes, caractérisé en ce que le dispositif de réglage (56) comporte deux pistons (86) guidés dans des cylindres (88) et qui sont tous deux déployés ou rétractés dans un état hors fonctionnement, sont tous deux à moitié déployés dans un état de fonctionnement au repos et/ou peuvent être complètement déployés ou rétractés dans un état de fonctionnement complet.

18. Véhicule selon une ou plusieurs des revendications précédentes, caractérisé par un circuit de sécurité de telle sorte que les deux dispositifs de réglage (56) sont rétractés lorsqu'une perturbation de l'envoi de fluide comprimé apparaît dans l'un de ces dispositifs.

19. Véhicule selon une ou plusieurs des revendications précédentes, caractérisé en ce que le support de roue (50) comporte des embouts de fixation destinés à recevoir des vis extensibles, qui peuvent être insérées dans la seconde branche (78).

20. Véhicule selon une ou plusieurs des revendications précédentes, caractérisé en ce que le dispositif de réglage (56) est relié à un système hydraulique pour une compensation de hauteur d'un adaptateur transversalement par rapport à la direction de déplacement, le système hydraulique guidant l'adaptateur parallèlement au sol indépendamment d'une inclinaison du terrain.
